# DEMANDE DE BREVET EUROPEEN

(11) **EP 1 143 370 A1**
(43) Date de publication de la demande: **10.10.2001**
(21) Numéro de dépôt: 01400854.4
(22) Date de dépôt: 03.04.2001
(51) Int. Cl.: G06F 17/60

(54) **Système d'élaboration de coupons électroniques**

(30) Priorité: 03.04.2000 FR 0004242
(71) Demandeur: Value Groupe, 75003 Paris (FR)
(72) Inventeur: de Tilly, Grégoire, 75003 Paris (FR); de Klebnikoff, Nicolas, 75001 Paris (FR)
(74) Mandataire: Jacobson, Claude

(57) **Abrégé**

Ce système d'élaboration de coupons électroniques d'offres relatives à des produits et/ou services destinées à être mises à la disposition de clients en temps réel, comprend un serveur d'offres adapté pour l'enregistrement des offres proposées par au moins un fournisseur et pour la consultation des offres et la collecte de coupons correspondants par au moins un client au moyen d'un terminal d'accès, le serveur d'offres comportant des moyens de stockage d'informations portant au moins sur les offres et sur le client, des moyens d'identification du client, des moyens d'élaboration d'au moins un coupon à partir desdites informations, le coupon comportant des données d'identification du client.

Les moyens d'élaboration comportent une première partie formant interface entre le serveur d'offres et le client, pour l'acquisition par le serveur d'informations de sélection du coupon et une seconde partie, inaccessible au client, formant générateur et émetteur du coupon à partir des informations de sélection acquises par la première partie, pour empêcher le client d'avoir accès au coupon avant son émission.

## Description

La présente invention concerne un système d'élaboration de coupons électroniques d'offres relatives à des produits et/ou services destinées à être mises à la disposition de clients en temps réel, ainsi qu'un procédé correspondant.

Plus particulièrement, l'invention se rapporte à un tel système qui comprend un serveur d'offres adapté pour l'enregistrement des offres proposées par au moins un fournisseur et pour la consultation des offres et la collecte de coupons correspondants par au moins un client au moyen d'un terminal d'accès, le serveur d'offres comportant des moyens de stockage d'informations portant au moins sur les offres et sur le client, des moyens d'identification du client, des moyens d'élaboration d'au moins un coupon à partir desdites informations, le coupon comportant des données d'identification du client.

Un tel système d'élaboration de coupons est décrit dans le brevet américain publié sous le numéro US 005,761,648.

Ce système met à la disposition d'un client connecté sur le serveur d'offres, des coupons utilisables soit sous forme électronique lorsque le client souhaite en bénéficier directement par Internet, soit sur papier, après impression des coupons sur une imprimante du client, lorsque celui-ci souhaite en bénéficier ultérieurement par exemple en se déplaçant chez un distributeur auprès de qui il fait valoir ses coupons. En particulier, le client peut télécharger les coupons électroniques sous forme de fichiers et les stocker sur son terminal afin de les imprimer et/ou les utiliser ultérieurement.

Cependant, dans ce cas, il est possible pour le client de dupliquer les coupons émis sur papier par simple copie de fichier ou photocopie, sans qu'il soit possible après duplication de distinguer l'original des copies. Ainsi un client lui-même distributeur pourrait être tenté de faire valoir auprès du fournisseur plusieurs exemplaires identiques d'un même coupon, ce qui constituerait une fraude.

L'invention vise à remédier aux inconvénients du système classique décrit précédemment en créant un système d'élaboration de coupons destinés à être mis à la disposition du client tout en étant infalsifiables par un distributeur.

L'invention a donc pour objet un système d'élaboration de coupons électroniques du type précité, caractérisé en ce que les moyens d'élaboration comportent une première partie formant interface entre le serveur d'offres et le client, pour l'acquisition par le serveur d'informations de sélection du coupon et une seconde partie, inaccessible au client, formant générateur et émetteur du coupon à partir des informations de sélection acquises par la première partie, pour empêcher le client d'avoir accès au coupon avant son émission.

Ce système permet de la sorte de rendre inaccessible et non téléchargeable un coupon électronique ce qui réduit les possibilités de falsification par modification du fichier électronique correspondant au coupon.

Le système d'élaboration de coupons électroniques selon l'invention peut en outre comporter une ou plusieurs des caractéristiques suivantes :
- le serveur d'offres comporte des moyens de transmission d'une partie seulement des informations à partir desquelles le coupon a été élaboré, à destination d'au moins un serveur distant permettant au client d'utiliser le coupon, et des moyens de réception d'informations portant sur l'utilisation du coupon par le client et sur d'autres actions de celui-ci sur le serveur distant, en provenance de ce serveur distant ;
- les moyens d'élaboration comportent des moyens de mise du coupon à disposition du client, le coupon étant imprimable sous la commande de celui-ci, et le système comporte des moyens de génération d'instructions en vue de l'impression d'au moins un lot d'étiquettes infalsifiables de validation du coupon comportant chacune des données d'identification du client ;
- les instructions comportent des informations d'adresse d'un destinataire du lot d'étiquettes, en vue de l'envoi de ce lot au destinataire.;
- les informations d'adresse comportent l'adresse du client, en vue de l'envoi du lot au client ;
- les moyens d'élaboration comportent des moyens de mise en page automatique de coupons, en vue de leur impression ;
- les moyens de stockage d'informations portant sur le client comportent notamment une partie de stockage d'informations de type historique, c'est-à-dire relative aux collectes et utilisations de coupons effectuées par le client, et une partie de type implicite, c'est-à-dire relative au comportement du client sur les pages du serveur d'offres accessibles par lui ;
- le serveur d'offres comporte des moyens de filtrage des offres proposées au client en fonction des informations portant sur ce client ; et
- le serveur d'offres comporte des moyens de présentation au fournisseur, d'informations portant sur les clients et relatives aux offres qu'il propose.

L'invention a également pour objet un procédé d'élaboration de coupons électroniques d'offres relatives à des produits et/ou services destinées à être mises à la disposition de clients en temps réel, comportant les étapes suivantes :
- le stockage d'informations portant sur les offres et sur le client ;
- l'identification du client ; et
- l'élaboration d'au moins un coupon à partir desdites informations, le coupon comportant des données d'identification du client ;
caractérisé en ce qu'il comporte en outre les étapes suivantes :
- l'acquisition d'informations de sélection du coupon ; et
- la génération du coupon à partir des informations de sélection acquises précédemment, le coupon étant inaccessible au client, pour empêcher le client d'avoir accès au coupon avant son émission.

L'invention sera mieux comprise à l'aide de la description qui va suivre, donnée uniquement à titre d'exemple et faite en se référant aux dessins annexés sur lesquels
- la figure 1 est un schéma illustrant la structure générale d'un système d'élaboration de coupons d'offres selon l'invention ; et
- la figure 2 représente un diagramme fonctionnel détaillant le procédé d'acquisition d'un coupon par un client connecté au serveur d'un système selon l'invention ; et
- la figure 3 représente un diagramme fonctionnel détaillant le procédé d'enregistrement de coupons par un fournisseur connecté au serveur du système.

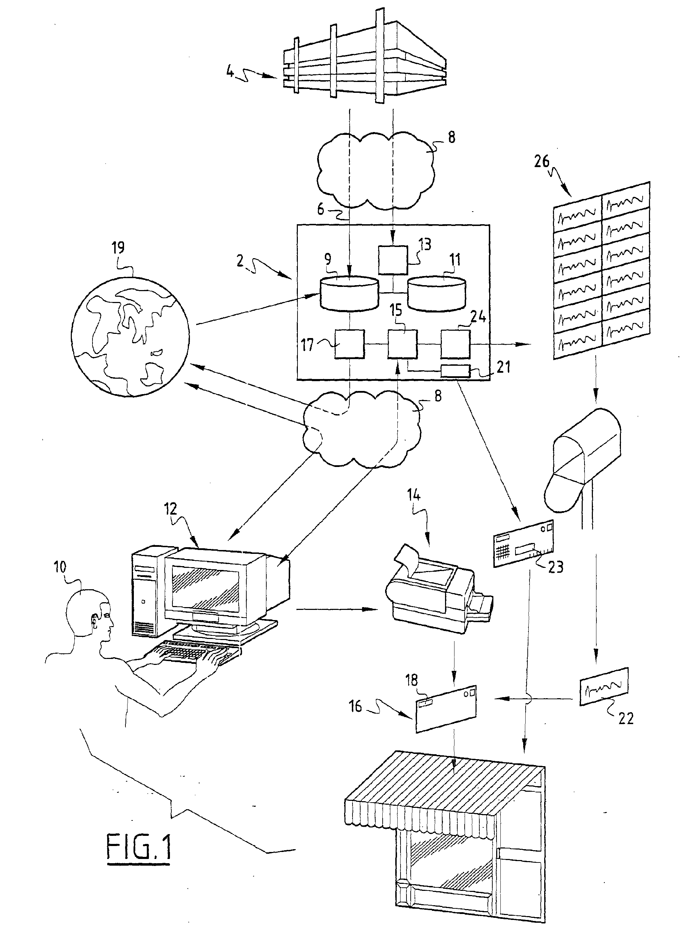

Le système représenté à la figure 1 comporte un serveur d'offres 2 accessible par un fournisseur 4 au moyen d'un accès sécurisé 6 transitant par un réseau 8 de type Internet. Cet accès permet la fourniture au serveur 2 en toute confidentialité, de données comportant des informations sur des coupons proposés par le fournisseur 4, telles que par exemple l'image de fond d'un coupon, le logo ou le libellé d'une marque, le nom d'un produit, le libellé d'une offre, la validité temporelle ou géographique d'une offre, etc. La nature et le stockage, dans une base de données Fournisseur 9, de ces informations étant connus de l'état de la technique, ils ne seront pas davantage détaillés.

Le serveur d'offres 2 comporte également des moyens de présentation 13 au fournisseur 4, d'informations de suivi de ses offres, ceux-ci étant connectés à la base de données Fournisseur 9 et à une base de données Consommateur 11.

Le serveur 2 est d'autre part accessible par un client 10 au moyen d'un terminal d'accès 12 raccordé au réseau Internet 8 et auquel est connectée une imprimante 14.

Le serveur 2 offre de façon classique la possibilité au client 10 d'accéder par le réseau 8 à des serveurs partenaires 19 pour bénéficier directement d'offres de produits et/ou services.

Il comporte également une interface 15 de sélection de coupons, d'une part accessible par le client 10 et d'autre part reliée à des moyens d'élaboration 17 de coupons électroniques inaccessibles au client 10.

Pour chaque coupon sélectionné, le client a le choix entre, premièrement, l'envoi par courrier postal du coupon sous une forme imprimée infalsifiable, deuxièmement, l'impression du coupon sur son imprimante 14, par exemple pour en bénéficier ultérieurement en se déplaçant lui-même chez un distributeur, et troisièmement, la mise du coupon à sa disposition, sur au moins un serveur distant 19 désigné par le client 10 et/ou le fournisseur 4.

Dans le premier cas, des moyens de commande 21 de génération d'un coupon infalsifiable 23 sont actionnés par l'interface 15 de sélection.

Dans le deuxième cas, le client 10 imprime sur l'imprimante 14 le coupon sélectionné élaboré à partir des informations stockées dans la base de données 9 par les moyens d'élaboration 17 et comprenant des données 18 d'identification du client. Ces données d'identification sont constituées par le nom, le prénom du client ainsi que par un code numérique personnel affecté par le serveur 2 au client 10. En sortie de l'imprimante, le client récupère ainsi un coupon imprimé 16.

Le coupon imprimé 16 seul ne permet pas au client 10 de bénéficier de l'offre. Il comporte ainsi une zone 20 sur laquelle doit être collée une étiquette de validation 22 du coupon.

Indépendamment de l'impression du coupon imprimé 16, des moyens de commande 24 du serveur 2 commandent d'une part la génération d'un lot 26 d'étiquettes autocollantes personnalisées, au nom du client, en fournissant les données d'identification 18, et d'autre part l'envoi du lot 26 d'étiquettes au client 10 en fournissant son adresse personnelle. Chaque étiquette comporte les données d'identification 18 et doit être collée sur un coupon imprimé 16 comportant les mêmes données d'identification, pour valider celui-ci.

Dans le troisième cas, c'est-à-dire lorsque le client souhaite bénéficier directement du coupon sous format électronique en indiquant par exemple au moins un serveur distant 19 de distribution de produits et/ou services sur lequel il pourra utiliser ce coupon, les moyens d'élaboration 17 transmettent au serveur distant 19 des données d'identification du client et des informations portant sur l'offre relative au coupon sélectionné. Le client peut alors, à tout moment, en se connectant sur le serveur distant 19, utiliser son coupon en s'identifiant auprès duclit serveur distant. Le serveur distant 19 transmet alors au serveur d'offres 2 un signal informant celui-ci de l'utilisation du coupon par le client 10 ainsi que d'autres informations concernant les achats supplémentaires éventuellement effectués.

Ainsi, que le coupon sélectionné soit utilisé sous la forme du coupon imprimé 16 ou directement sous format électronique auprès du serveur distant 19, à aucun moment le client 10 et le distributeur de produits et/ou services du serveur distant 19 n'a accès au coupon électronique.

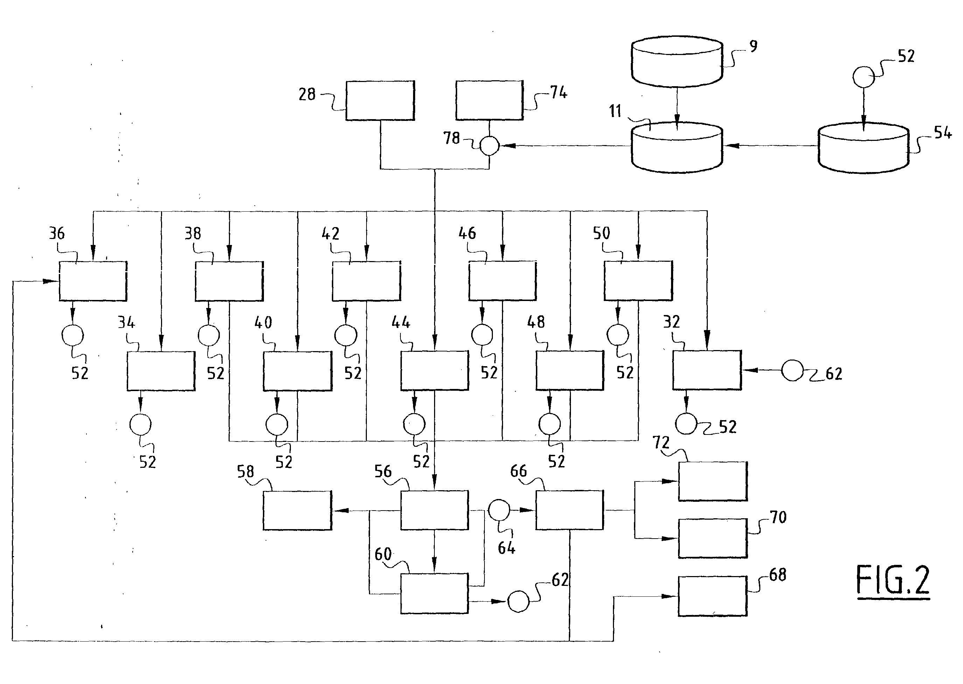

Le fonctionnement du système décrit précédemment est représenté à la figure 2, lorsqu'un client est connecté au serveur 2, au moyen d'un logiciel classique de navigation sur Internet.

Un client non encore inscrit est accueilli par une page d'inscription 28 du serveur 2 qui, de façon classique, lui demande d'entrer son nom, son prénom, ainsi qu'un nouveau mot de passe et lui affecte un code numérique. personnel. Toutes ces données sont stockées par le serveur sur la base de données Consommateur 11.

Le client peut ensuite accéder à plusieurs pages de présentation, telles que par exemple une page 32 de conseils, une page 34 de participation à des concours, une page 36 de questionnaire d'identification et différentes pages d'accès à des offres. Ces pages d'accès peuvent par exemple comporter un moteur de recherche 38 des offres, une page de présentation 40 des offres de dernière heure, une page de présentation 42 des offres par catégorie, une page de présentation 44 d'événements promotionnels, une page de présentation 46 d'offres par marque, une page de présentation 48 de produits ou services gratuits et une page de présentation 50 d'affaires sélectionnées.

Lors de l'accès par le client à l'une des pages, 32, 34, 36, 38, 40, 42, 44, 46, 48 ou 50, son comportement, ses actions ainsi que les informations explicites le concernant, ces dernières étant par exemple recueillies grâce à des questionnaires, sont transmis à des moyens de suivi 52, qui stockent ensuite ces données dans une base de données Profil 54 du serveur 2.

Par l'intermédiaire d'une des pages 38, 40, 42, 44, 46, 48 ou 50, le client accède à une page de présentation 56 d'une liste d'offres, cette page faisant partie de l'interface 15 de sélection.

Si le client est intéressé par l'une de ces offres, le système peut lui donner la possibilité d'accéder à un site partenaire 58 extérieur au serveur d'offres, lui permettant de bénéficier effectivement de la promotion, le serveur d'offres n'étant pas pourvu de moyens pour exécuter une transaction.

A partir de la page de présentation 56, le client peut également accéder à une page de présentation 60 de détail d'une offre, cette page étant reliée à des moyens de liaison 62 vers la page 32 de conseils.

Enfin, à partir de la page de présentation 56, le client peut sélectionner plusieurs offres pour lesquelles il souhaite bénéficier d'un coupon grâce à des moyens de sélection 64.

Chaque sélection d'une offre active les moyens d'élaboration 17 d'un coupon à partir d'informations stockées dans la base de données Fournisseur 9, lesquelles sont accessibles uniquement par les moyens d'élaboration 17 du serveur 2.

Le coupon, une fois élaboré de façon classique et stocké sous forme d'un fichier au format d'une image, est placé dans une page de présentation 66 d'une liste des offres sélectionnées. La partie de cette page comportant les images de coupons est invisible à l'écran par le client 10 qui, lui, ne voit qu'une partie comportant la liste des offres sélectionnées.

A partir de cette page de présentation 66, le client peut accéder à une page 68 d'activation des moyens de commande de génération d'un lot d'étiquettes, s'il a répondu au questionnaire d'identification présenté sur la page 36.

Pour recevoir chez lui le coupon, dont il souhaite bénéficier, sous la forme d'un coupon imprimé, le client peut accéder, au choix, d'une part à une page 70 d'activation de moyens de commande de génération d'un coupon imprimé infalsifiable et d'envoi de celui-ci par courrier postal, d'autre part à une page 72 d'activation de moyens de commande d'impression du coupon sur l'imprimante 14.

Lorsque plusieurs coupons doivent être imprimés, ils sont positionnés par des moyens de mise en page dans la partie invisible de la.page 66 de sorte qu'une feuille de format A4 comporte un nombre entier de coupons.

Après confirmation par le client, la partie invisible de la page 66 est imprimée sur l'imprimante 14, de sorte qu'à aucun moment le client ne peut visualiser les coupons avant leur réception sur support papier en sortie d'imprimante.

Pour bénéficier des coupons sélectionnés directement sous format électronique sur le site partenaire 58 par exemple, le client commande l'envoi par les moyens d'élaboration 17, au site partenaire 58, d'informations relatives à ces coupons comme cela a été décrit précédemment lors de la description de la figure 1.

Un client déjà inscrit par le serveur 2 lors d'une précédente connexion est accueilli par une page d'accueil 74 qui, de façon classique, lui demande d'entrer son nom et son mot de passe, si celui-ci n'a pas été reconnu automatiquement par le serveur, selon un procédé classique.

Par contre, contrairement à un client non encore inscrit, ce client n'accède aux pages de présentation d'offres qu'après un filtrage de celles-ci par des moyens de filtrage 78, à partir des informations stockées dans la base de données Consommateur 11 et dans la base de données Profil 54 par les moyens de suivi 52, lors d'au moins une précédente connexion.

Le reste du fonctionnement du système est identique à celui décrit précédemment.

Les coupons utilisés sous format électronique sont infalsifiables puisque les informations transmises par les moyens d'élaboration 17 du serveur d'offres 2 au serveur distant 19 ne permettent pas à celui-ci de reconstituer intégralement les coupons.

De même, les coupons reçus par le client par courrier postal sont infalsifiables et peuvent donc être utilisés seuls pour faire valoir l'offre auprès d'un distributeur.

Par contre, les coupons imprimés par le client doivent être associés chacun à une étiquette infalsifiable par collage de celle-ci sur la zone 20, comme précédemment décrit, pour être validés et faire valoir l'offre auprès du distributeur.

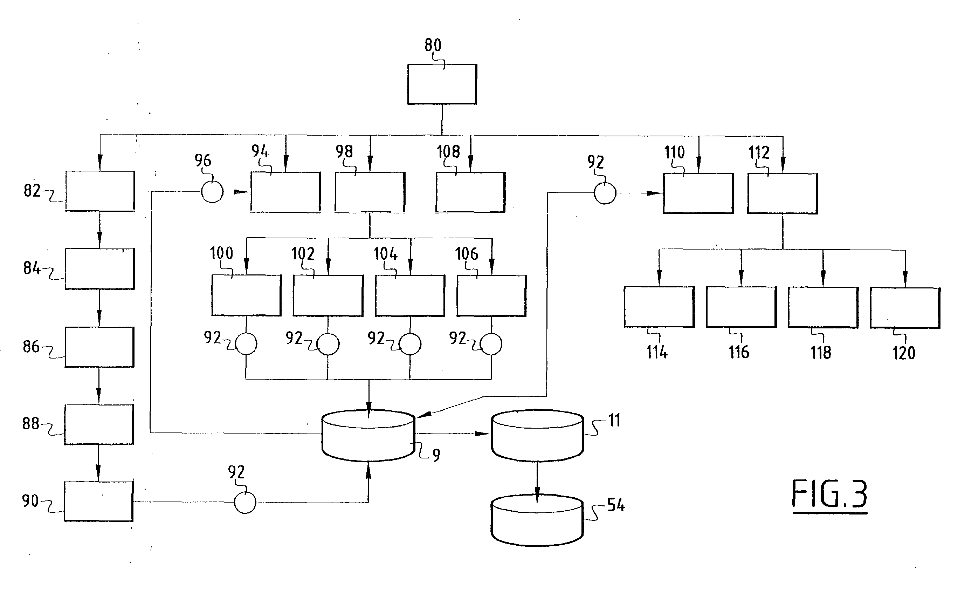

Le fonctionnement du système décrit précédemment est représenté à la figure 3 lorsqu'un fournisseur est connecté au serveur 2, au moyen d'un logiciel classique de navigation sur Internet.

Un fournisseur est accueilli par une page d'inscription 80 du serveur 2 qui de façon classique lui demande d'entrer des données d'identification associées à un mot de passe. Toutes ces données sont stockées par le serveur sur la base de données Fournisseur 9.

Le fournisseur peut ensuite accéder à plusieurs pages lui permettant de définir une offre, telles que par exemple une page 82 de création de l'offre, une page 84 de définition de l'offre, une page 86 de définition de distributeurs, une page 88 de définition de ciblage, et une page 90 de définition de ciblage géographique. Toutes ces données sont alors enregistrées dans la base de données Fournisseur 9 par des moyens d'enregistrement 92.

Le fournisseur peut en outre accéder à une page 94 de présentation de statistiques relatives à son offre, les statistiques étant obtenues à partir de la base de données Fournisseur 9 par des moyens d'extraction 96.

Le fournisseur peut modifier son offre en accédant à une page 98 de modifications, puis à des pages 100, 102, 104, 106 de modifications respectives des offres, des distributeurs, du ciblage et du ciblage géographique.

Le fournisseur peut aussi accéder à une page 108 d'historique des offres, faisant état des coupons émis, utilisés, etc.

Il peut également accéder à une page 110 de suppression de l'offre, la suppression étant effectuée dans la base de données Fournisseur 9 par les moyens d'enregistrement 92.

Enfin, le fournisseur peut accéder à une page 112 de présentation de détails relatifs à son offre se déclinant elle-même en plusieurs pages 114, 116, 118 et 120 de présentation respectives de l'offre, des distributeurs, du ciblage et du ciblage géographique.

Il apparaît qu'un système d'élaboration de coupons d'offres selon l'invention permet de protéger davantage les coupons de toute fraude en ne les présentant jamais au client sous format électronique.

En effet, le client ne peut visualiser les coupons qu'après impression, sous la forme de coupons imprimés 16, lesquels ne sont valides que lorsqu'ils sont associés à des étiquettes infalsifiables.

## Revendications

1. Système d'élaboration de coupons électroniques d'offres relatives à des produits et/ou services destinées à être mises à la disposition de clients en temps réel, comprenant un serveur d'offres adapté pour l'enregistrement des offres proposées par au moins un fournisseur et pour la consultation des offres et la collecte de coupons correspondants par au moins un client au moyen d'un terminal d'accès, le serveur d'offres comportant des moyens de stockage d'informations portant au moins sur les offres et sur le client, des moyens d'identification du client, des moyens d'élaboration d'au moins un coupon à partir desdites informations, le coupon comportant des données d'identification du client, **caractérisé en ce que** les moyens d'élaboration comportent une première partie formant interface entre le serveur d'offres et le client, pour l'acquisition par le serveur d'informations de sélection du coupon et une seconde partie, inaccessible au client, formant générateur et émetteur du coupon à partir des informations de sélection acquises par la première partie, pour empêcher le client d'avoir accès au coupon avant son émission.

2. Système d'élaboration de coupons électroniques selon la revendication 1, **caractérisé en ce que** le serveur d'offres comporte des moyens de transmission d'une partie seulement des informations à partir desquelles le coupon a été élaboré, à destination d'au moins un serveur distant permettant au client d'utiliser le coupon, et des moyens de réception d'informations portant sur l'utilisation du coupon par le client et sur d'autres actions de celui-ci sur le serveur distant, en provenance de ce serveur distant.

3. Système d'élaboration de coupons électroniques selon la revendication 1 ou 2, **caractérisé en ce que** les moyens d'élaboration comportent des moyens de mise du coupon à disposition du client, le coupon étant imprimable sous la commande de celui-ci, et **en ce que** le système comporte des moyens de génération d'instructions en vue de l'impression d'au moins un lot d'étiquettes infalsifiables de validation du coupon. comportant chacune des données d'identification du client.

4. Système d'élaboration de coupons électroniques selon la revendication 3, **caractérisé en ce que** les instructions comportent des informations d'adresse d'un destinataire du lot d'étiquettes, en vue de l'envoi de ce lot au destinataire.

5. Système d'élaboration de coupons électroniques selon la revendication 4, **caractérisé en ce que** les informations d'adresse comportent l'adresse du client, en vue de l'envoi du lot au client.

6. Système d'élaboration de coupons électroniques selon l'une des revendications 3 à 5, **caractérisé en ce que** les moyens d'élaboration comportent des moyens de mise en page automatique de coupons, en vue de leur impression.

7. Système d'élaboration de coupons électroniques selon l'une des revendications 1 à 6, **caractérisé en ce que** les moyens de stockage d'informations portant sur le client comportent notamment une partie de stockage d'informations de type historique, c'est-à-dire relative aux collectes et utilisations de coupons effectuées par le client, et une partie de type implicite, c'est-à-dire relative au comportement du client sur les pages du serveur d'offres accessibles par lui.

8. Système d'élaboration de coupons électroniques selon l'une des revendications 1 à 7, **caractérisé en ce que** le serveur d'offres comporte des moyens de filtrage des offres proposées au client en fonction des informations portant sur ce client.

9. Système d'élaboration de coupons électroniques selon l'une des revendications 1 à 8, **caractérisé en ce que** le serveur d'offres comporte des moyens de présentation au fournisseur, d'informations portant sur les clients et relatives aux offres qu'il propose.

10. Procédé d'élaboration de coupons électroniques d'offres relatives à des produits et/ou services destinées à être mises à la disposition de clients en temps réel, comportant les étapes suivantes :
- le stockage d'informations portant sur les offres et sur le client ;
- l'identification du client ; et
- l'élaboration d'au moins un coupon à partir desdites informations, le coupon comportant des données d'identification du client ;
**caractérisé en ce qu'**il comporte en outre les étapes suivantes :
- l'acquisition d'informations de sélection du coupon ; et
- la génération du coupon à partir des informations de sélection acquises précédemment, le coupon étant inaccessible au client, pour empêcher le client d'avoir accès au coupon avant son émission.
